# EUROPÄISCHE PATENTSCHRIFT

(11) **EP 1 475 620 B1**
(45) Veröffentlichungstag und Bekanntmachung des Hinweises auf die Patenterteilung: **01.10.2008**
(21) Anmeldenummer: 04010406.9
(22) Anmeldetag: 03.05.2004
(51) Int. Cl.: G01K 1/16, G01K 13/02

(54) **Einrichtung zur Messung der Raumtemperatur**
Room temperature measuring device
Dispositif de mesurer de la température d'un local

(30) Priorität: 09.05.2003 DE 10320769
(43) Veröffentlichungstag der Anmeldung: 10.11.2004
(73) Patentinhaber: ROBERT BOSCH GMBH, 70442 Stuttgart (DE)
(72) Erfinder: Kessler, Arno, 35649 Bischoffen (DE)

(56) Entgegenhaltungen:
- DE-A- 3 405 461
- FR-A- 2 681 414
- US-A- 4 347 443
- US-B1- 6 347 747

## Beschreibung

Die Erfindung betrifft eine Einrichtung zur Messung der Raumtemperatur, insbesondere für eine Regelung einer Heizungsanlage, nach dem Oberbegriff des Patentanspruches 1. Üblicherweise sind an die Regelung einer Heizungsanlage Fernbedienungsgeräte angeschlossen, um den Nutzern eines Gebäudes die Bedienung der Heizungsanlage von einem Raum aus zu ermöglichen. Für einen vollautomatischen Betrieb von bekannten Heizungsanlagen sind außerdem diverse Messwerte erforderlich, nach denen die erzeugte Wärmeleistung und/oder die in die Räume eingebrachte Wärmeenergie geregelt wird. Dazu gehört auch die Raumtemperatur, denn diese ist maßgebend für die Rückmeldung zur Regelung der Heizungsanlage, insbesondere in Bezug auf die tatsächlichen Verhältnisse gegenüber den vom Nutzer eingestellten Sollwerten.

In der Regel sind Raumtemperaturfühler in das Gehäuse eines Fernbedienungsgerätes integriert, damit nur ein einziges Bauteil in einem Raum montiert und an die Regelung angeschlossen werden muss. Andererseits ist das Fühlerelement dort auch gegenüber mechanischen Einflüssen geschützt. Im relativ kompakten Gehäuse eines Fernbedienungsgerätes befinden sich allerdings Wärme erzeugende elektronische Bauteile, wie zum Beispiel ein Spannungsregler und/oder ein Display mit Hintergrundbeleuchtung. Sobald diese Bauteile selbst bzw. die daran angeschlossenen elektrischen Verbraucher eingeschaltet werden, kommt es im Inneren des Gehäuses zu einer Wärmeentwicklung. Zusätzlich speichern die Bauteile sowie das Gehäuse noch einen Teil der Wärme, so dass auch ein Abschalten eines Bauteils nur zu einer verzögerten Abkühlung führt.

Sobald der Raumtemperaturfühler mit Fremdwärme beaufschlagt wird, verfälscht sich somit der gemessene Wert der Raumtemperatur. Selbst geringfügige Abweichungen des gemessenen Wertes vom tatsächlich vorhandenen, aktuellen Wert der Raumtemperatur, können möglicherweise zu einer ungünstigeren Regelstrategie oder zu Komforteinbußen für die Nutzer im Raum führen. Dies ist natürlich generell stark von gebäude- und anlagenspezifischen Gegebenheiten abhängig. Beispielsweise identifiziert die Regelung Fremdwärme am Raumtemperaturfühler als steigende Raumtemperatur und senkt dann die Heizkurve oder den Temperatur-Sollwert für den Raum ab, obwohl tatsächlich weiter geheizt werden müsste.

Die DE 34 05 461 A1 betrifft einen Raumthermostaten in Unterputzausführung mit einem Temperaturfühler im Bereich der Frontplatte, und bei Raumtemperaturfühler gemäß der DE-OS 17 79 697 ist der temperaturabhängige Widerstand in einem hohl ausgebildeten, mit Luftschlitzen versehenen Handbedienungsorgan untergebracht. Eine Wärmeisolierung innerhalb eines Gehäuses zur Abschottung von mindestens einer dort befindlichen Wärmequelle sowie die Verwendung von mehreren Temperaturfühlern offenbart die DE 197 28 803 C1. Dabei soll insbesondere verhindert werden, dass Übertemperaturen im Gehäuse die Temperaturmessung verfälschen. Weiterhin ist in der DE 32 20 925 A1 ein elektrisches Thermometer zur Messung von Lufttemperaturen enthalten, wobei ein mit einem Temperaturfühler verbundenes Wärmeübertragungsrohr das Gehäuse durchdringt. Auch die JP02232534 A zeigt einen Thermostaten in einem Gehäuse. Mit dem Stand der Technik war generell eine kompakte Bauform von Gehäusen nicht mit dem Problem der Wärmeentwicklung durch die elektronischen Bauteile in Einklang zu bringen.

Aus der US 6 347 747 B1 geht eine Thermostatanordnung hervor, bei welcher die Oberfläche einer Platine mit einem Wärme erzeugenden Element im oberen Bereich und einem Temperatursensor im unteren Bereich ausgestattet ist. Beide Elemente werden jeweils in einer Kammer in einer zugeordneten Platte angeordnet, welche einem die Gesamtanordnung begrenzenden Gehäuseteil zugeordnet ist. Dabei sind beide Kammern durch die Plattengeometrie voneinander getrennt. Jeweils im Bereich der Kammern besitzt das Gehäuseteil eine Lochung, damit der Bereich der Kammern und die dortigen innen liegenden Bauteile mit der Umgebungsluft in Verbindung stehen. Völlig getrennt voneinander wird dadurch die Wärme des Bauteiles in der oberen Kammer gut nach außen abgeführt, und in der unteren Kammer werden mit den Sensor die Temperaturmessungen durchgeführt.

Weiterhin zeigt die US 4 347 443 ein Raumthermostat mit einer Platine in einem umgebenden Gehäuse. Entlang der gesamten Ober- und Unterseite besitzt dabei das Gehäuse Schlitze zur Belüftung des gesamten Innenraumes. Um den Temperatursensor vor Messwertabweichungen wegen möglicherweise zu warmer, durch die Platine aufgeheizter Luft zu schützen, ist ein Schutzschirm vorgesehen. Dieser schirmt den Temperatursensor gegenüber der Platine ab.

Der Erfindung liegt daher die Aufgabe zu Grunde, eine möglichst genaue Einrichtung zur Messung der Raumtemperatur für eine Regelung einer Heizungsanlage mit einem Fernbedienungsgerät zu schaffen, und dabei die Beeinflussbarkeit der Messwerte durch die Wärmeentwicklung in elektronischen Bauteilen innerhalb des Gehäuses des Fernbedienungsgerätes zu minimieren.

Erfindungsgemäß wurde dies mit den Merkmalen des Patentanspruches 1 gelöst. Vorteilhafte Weiterbildungen sind den Unteransprüchen zu entnehmen.

Die Einrichtung zur Messung der Raumtemperatur ist gekennzeichnet durch mindestens einen vertikal ausgerichteten Schacht in einem Teilbereich des Gehäuses, mit Öffnungen in der oberen und unteren Gehäusewand. Der Raumtemperaturfühler befindet sich im Bereich der als Einmündung dienenden Öffnungen im unteren Bereich, und Wärme erzeugende elektronische Bauteile sind mit Abstand dazu im oberen Bereich des Schachtes angeordnet. Durch die Erwärmung der Bauteile im oberen Bereich des Schachtes entsteht eine Konvektionsströmung, so dass an den Einströmöffnungen der Raumtemperaturfühler direkt von der Raumluft beaufschlagt wird.

Der Schacht ist innerhalb des Gehäuses mit einer sich im Wesentlichen vertikal erstreckenden Trennwand vom sonstigen Gehäuse-Innenraum abgetrennt. Vorzugsweise durchgreift die Platine mit einer relativ kleinen Zone, in welcher im Wesentlichen die Wärme erzeugenden elektronischen Bauteile angeordnet sind, die Trennwand und ragt in den oberen Bereich des Schachtes hinein. Wärme kann daher direkt durch die benachbarten Öffnungen in der oberen Gehäusewand entweichen. Außerdem kommt dadurch die Konvektionsströmung durch den Schacht in Gang.

Der Raumtemperaturfühler wird vorzugsweise im unteren Bereich des Schachtes über relativ lange Leitungen an die Platine angeschlossen, um Wärmeleitung von der Platine zum Sensor möglichst zu verhindern. Weiterhin kann zwischen dem Raumtemperaturfühler im unteren und den Wärme erzeugenden elektronischen Bauteilen im oberen Bereich des Schachtes mindestens eine horizontal ausgerichtete Trennwand angeordnet sein. Diese dient als Barriere für die Wärmestrahlung, kann aber von Luft durchströmt oder im Falle einer labyrinthartigen Anordnung umströmt werden. In einer bevorzugten Ausführungsform ist der sich vertikal erstreckende Schacht in einem Seitenbereich des Gehäuses angebracht.

Mit der erfindungsgemäßen Einrichtung wird eine einfache, aber genaue Messung der Raumtemperatur für eine Regelung einer Heizungsanlage mit einem Fernbedienungsgerät ermöglicht. Die Beeinflussbarkeit der Messwerte durch Wärme erzeugende elektronische Bauteile innerhalb des Gehäuses des Fernbedienungsgerätes wird minimiert. Dadurch sind unerwünschte Folgen für die auf Raumtemperatur-Messwerten basierende Regelstrategie, insbesondere Komforteinbußen für Raumnutzer, ausgeschlossen. Lediglich die Innenraum- und Platinengestaltung in einem Fernbedienungsgerät werden von der Erfindung beeinflusst. Daher bleiben im Vergleich mit herkömmlichen Gehäusen für ähnliche Zwecke sowohl die Außenabmessungen als auch die bedienungsfreundlichen Gestaltungsmöglichkeiten unverändert.

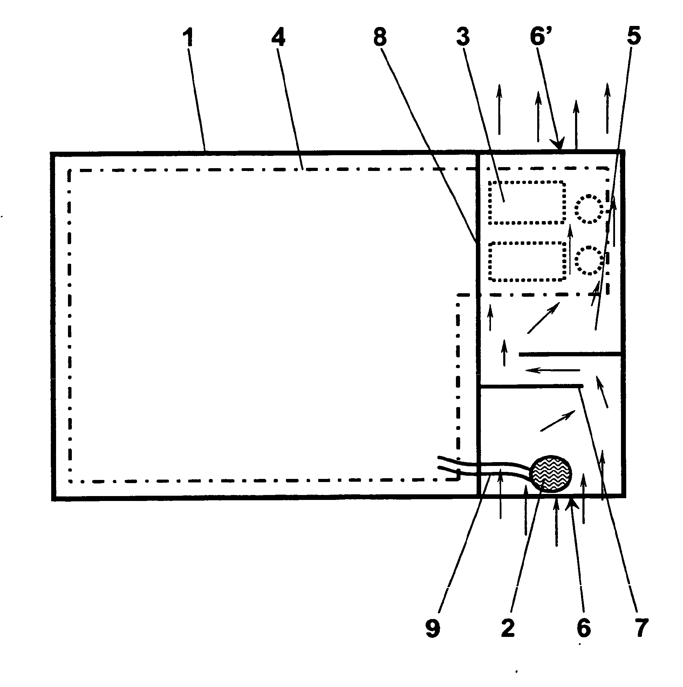

Die Zeichnung stellt ein Ausführungsbeispiel einer Einrichtung zur Messung der Raumtemperatur der Erfindung dar. Eine einzige Figur zeigt die erfindungsgemäße, schematische Gestaltung eines Fernbedienungsgerätes mit integriertem Raumtemperaturfühler für eine Regelung einer Heizungsanlage.

Das Fernbedienungsgerät besteht aus einem Gehäuse 1 mit einem darin angeordneten Raumtemperaturfühler 2 und Wärme erzeugenden elektronischen Bauteilen 3 auf einer Platine 4. Um eine Konvektionsströmung zu erzeugen, nämlich die Wärmeabfuhr aus dem Bereich der Wärme erzeugenden elektronischen Bauteile 3 und die Zuströmung von Raumluft zum Raumtemperaturfühler 2 zu begünstigen, bildet das Gehäuse 1 mindestens in einem Teilbereich einen vertikal ausgerichteten Schacht 5. Dieser ist mit Öffnungen 6, 6' in der oberen und unteren Wand des Gehäuses 1 versehen, wobei der Raumtemperaturfühler 2 im Bereich der als Einmündung dienenden Öffnungen 6 im unteren Bereich des Schachtes 5 angeordnet ist. Die Wärme erzeugenden elektronischen Bauteile 3 befinden sich mit Abstand dazu im oberen Bereich des Schachtes 5 und sind zur Abschirmung von Strahlungswärme mit horizontalen Trennwänden 7 im Schacht 5 vom Raumtemperaturfühler 2 abgegrenzt.

Der Schacht 5 ist innerhalb des Gehäuses 1 mit einer sich im Wesentlichen vertikal erstreckenden Trennwand 8 vom übrigen Gehäuse-Innenraum abgetrennt. Mit einem Teilbereich, in dem die wesentlichen Wärme erzeugenden elektronischen Bauteile 3 angeordnet sind, durchgreift die Platine 4 die Trennwand 8 und ragt in den oberen Bereich des Schachtes 5. Über relativ lange, eine Wärmeleitung vermindernde Leitungen 9 ist der Raumtemperaturfühler 2 im unteren Bereich des Schachtes 5 an die Platine 4 angeschlossen.

## Patentansprüche

1. Einrichtung zur Messung der Raumtemperatur, insbesondere für eine Regelung einer Heizungsanlage, mit einem Fernbedienungsgerät, wobei das Fernbedienungsgerät ein Gehäuse mit einem darin angeordneten Raumtemperaturfühler und Wärme erzeugenden elektronischen Bauteilen aufweist, welche auf mindestens einer Platine angeordnet sind,
**dadurch gekennzeichnet, dass** das Gehäuse (1) mindestens in einem Teilbereich einen bei Verwendung der Einrichtung vertikal ausgerichteten Schacht (5) mit Öffnungen (6, 6') in der oberen und unteren Wand des Gehäuses (1) bildet, dass der Raumtemperaturfühler (2) im Bereich der als Einmündung dienenden Öffnungen (6) im unteren Bereich des Schachtes (5) angeordnet ist und dass Wärme erzeugende elektronische Bauteile (3) mit Abstand dazu im oberen Bereich des Schachtes (5) angeordnet sind, wobei der Schacht (5) innerhalb des Gehäuses (1) mit einer sich im Wesentlichen vertikal erstreckenden Trennwand (8) vom sonstigen Innenraum des Gehäuses (1) abgetrennt ist.

2. Einrichtung nach Anspruch 1,
**dadurch gekennzeichnet, dass** die Platine (4) mit einer Zone, in welcher im Wesentlichen die Wärme erzeugenden elektronischen Bauteile (3) angeordnet sind, die Trennwand (8) durchgreift und in den oberen Bereich des Schachtes (5) ragt.

3. Einrichtung nach Anspruch 1 oder 2,
**dadurch gekennzeichnet, dass** der Raumtemperaturfühler (2) im unteren Bereich des Schachtes (5) über relativ lange, Wärmeleitung vermindernde Leitungen (9) an die Platine (4) angeschlossen ist.

4. Einrichtung nach einem der Ansprüche 1 bis 3,
**dadurch gekennzeichnet, dass** zwischen dem Raumtemperaturfühler (2) im unteren und den Wärme erzeugenden elektronischen Bauteilen (3) im oberen Bereich des Schachtes (5) mindestens eine horizontal verlaufende Trennwand (7) als von Luft durchströmbare Barriere für die Wärmestrahlung angeordnet ist.

5. Einrichtung nach einem der Ansprüche 1 bis 4,
**dadurch gekennzeichnet, dass** der sich vertikal erstreckende Schacht (5) in einem Seitenbereich des Gehäuses (1) angebracht ist.

## Claims

1. A device for measuring the room temperature, in particular for a control of a heating system, comprising a remote-control device, wherein the remote-control device has a housing including a room temperature sensor and heat-generating electronic components arranged therein, which are arranged on at least one circuit board,
**characterized in that** the housing (1) forms, at least in a portion, a shaft (5) which is vertically aligned at use of the device, with openings (6, 6') in the upper and lower wall of the housing (1), that the room temperature sensor (2) in the region of the openings (6) serving as inlet is arranged in the lower region of the shaft (5), and that the heat-generating electronic components (3) are arranged with a distance thereto in the upper region of the shaft (5), wherein the shaft (5) is separated within the housing (1) by a substantially vertically extending partition wall (8) from the rest of the interior of housing (1).

2. The device according to claim 1,
**characterized in that** the circuit board (4) penetrates the partition wall (8) with a relatively small zone, in which substantially the heat-generating electronic components (3) are arranged, and projects into the upper region of the shaft (5).

3. The device according to claim 1 or claim 2,
**characterized in that** the room temperature sensor (2) is connected in the lower region of the shaft (5) to the circuit board (4) via relatively long, heat transfer-reducing lines (9).

4. The device according to any one of the claims 1 to 3,
**characterized in that** between the room temperature sensor (2) in the lower, and the heat-generating electronic components (3) in the upper region of the shaft (5), at least one horizontally extending partition wall (7) is arranged as a barrier for thermal radiation, through which air can flow.

5. The device according to any one of the claims 1 to 4,
**characterized in that** the vertically extending shaft (5) is mounted in a side region of the housing (1).

## Revendications

1. Dispositif pour mesurer la température ambiante, notamment pour une régulation d'un système de chauffage, avec un appareil de télécommande, l'appareil de télécommande comportant un boîtier avec une sonde de température ambiante disposée dans ce dernier et des composants électroniques générant de la chaleur, qui sont disposés sur au moins une carte,
**caractérisé en ce que** le boîtier (1) forme au moins dans une région partielle un puits (5) orienté à la verticale, si on utilise l'invention, avec des ouvertures (6, 6') dans la paroi supérieure et inférieure du boîtier (1), **en ce que** la sonde de température ambiante (2) est disposée dans la région des ouvertures (6) servant d'embouchures, dans la région inférieure du puits (5) et **en ce que** des composants électroniques (3) générant de la chaleur sont disposés avec un écart par rapport à ce dernier dans la région supérieure du puits (5), le puits (5) étant séparé à l'intérieur du boîtier (1) par une paroi de séparation (8) s'étendant sensiblement à la verticale du reste de l'espace intérieur du boîtier (1).

2. Dispositif selon la revendication 1,
**caractérisé en ce que**, par une zone dans laquelle sont sensiblement disposés les composants électroniques (3) générant de la chaleur, la carte (4) traverse la paroi de séparation (8) et saillit dans la région supérieure du puits (5).

3. Dispositif selon la revendication 1 ou 2,
**caractérisé en ce que** dans la région inférieure du puits (5), la sonde de température ambiante (2) est raccordée sur la carte (4) par l'intermédiaire de conduits (9) relativement longs, réduisant la conduction de chaleur.

4. Dispositif selon l'une quelconque des revendications 1 à 3,
**caractérisé en ce qu'**entre la sonde de température ambiante (2) dans la région inférieure et les composants électroniques (3) générant de la chaleur dans la région supérieure du puits (5) est disposée au moins une paroi de séparation (7) s'étendant à l'horizontale, en tant que barrière susceptible d'être traversée par une circulation d'air pour le rayonnement thermique.

5. Dispositif selon l'une quelconque des revendications 1 à 4,
**caractérisé en ce que** le puits (5) s'étendant à la verticale est monté dans une région latérale du boîtier (1).
